# EUROPÄISCHE PATENTSCHRIFT

(11) **EP 3 106 660 B1**
(45) Veröffentlichungstag und Bekanntmachung des Hinweises auf die Patenterteilung: **24.01.2018**
(21) Anmeldenummer: 16174355.4
(22) Anmeldetag: 14.06.2016
(51) Int. Cl.: F03D 17/00, F03D 7/02, F03D 7/04, F03D 9/00

(54) **VERFAHREN UND COMPUTERPROGRAMMPRODUKT ZUR ÜBERPRÜFUNG DER AUSRICHTUNG VON WINDENERGIEANLAGEN, SOWIE ANORDNUNG AUS WENIGSTENS ZWEI WINDENERGIEANLAGEN**
METHOD AND COMPUTER PROGRAM PRODUCT FOR CHECKING THE ALIGNMENT OF WIND TURBINES, AND ASSEMBLY OF AT LEAST TWO WIND TURBINES
PROCEDE ET PRODUIT PROGRAMME INFORMATIQUE DESTINE A VERIFIER L'ALIGNEMENT D'EOLIENNES, AGENCEMENT CONSTITUE D'AU MOINS DEUX EOLIENNES

(30) Priorität: 15.06.2015 DE 102015007441
(43) Veröffentlichungstag der Anmeldung: 21.12.2016
(73) Patentinhaber: Senvion GmbH, 22297 Hamburg (DE)
(72) Erfinder: Mittelmeier, Niko, 22303 Hamburg (DE)
(74) Vertreter: Glawe, Delfs, Moll

(56) Entgegenhaltungen:
- EP-A2- 1 790 851
- CN-A- 1 298 092
- CN-U- 204 344 371

## Beschreibung

Die Erfindung betrifft ein Verfahren und ein Computerprogrammprodukt zur Überprüfung der Ausrichtung von Windenergieanlagen, sowie eine Anordnung aus wenigstens zwei Windenergieanlagen.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann.

Um bei einer Windenergieanlage eine maximale Windausbeute zu erreichen, wird der Rotor der Windenergieanlage dem Wind nachgeführt. Hierzu wird die Gondel mit dem Rotor so auf dem Turm gedreht, dass die Rotorachse parallel zur Windrichtung (also die Himmelsrichtung, aus der der Wind kommt) ausgerichtet ist, womit der Wind senkrecht auf die Rotorfläche auftrifft. Ist eine entsprechende Ausrichtung nicht gegeben, ist die Windausbeute der Windenergieanlage nicht ideal.

Zur Nachführung der Windenergieanlagen wird regelmäßig über eine Windfahne an der Gondel der Windenergieanlage die Windrichtung als relativer Wert bezogen auf die Ausrichtung der Gondel und insbesondere deren Rotorachse bestimmt. Anschließend wird die Gondel des Turmes mit Hilfe einer Steuerungseinrichtung entsprechend der erfassten Windrichtung gedreht

Ist die Erfassung der Windrichtung fehlerhaft, dass es zu Abweichungen zwischen den erfassten Werten und der tatsächlichen Windrichtung kommt, wird der Rotor der Windenergieanlage trotz aktiver Steuerung der Ausrichtung der Gondel nicht optimal zum Wind ausgerichtet, was regelmäßig zu unerwünschten Ertragsverlusten führt.

Um entsprechende Ertragsverluste zu reduzieren ist, für den Fall, dass mehrere Windenergieanlagen als räumliche Ansammlung und technische Einheit in einem Windpark zusammengefasst sind, aus der EP 2 520 764 A1 ein Verfahren bekannt, eine fehlerhafte Erfassung von Windrichtung durch einer Windenergieanlage, die zu einer Fehlausrichtung dieser Windenergieanlage führt, zu erkennen. Dazu werden unter der Annahme, dass die Windrichtung bei allen Windenergieanlagen im Wesentlichen identisch sein sollte, aus den erfassten relativen Windrichtungen aller Windenergieanlagen mit Hilfe von der Winkellage der Gondel gegenüber dem Turm, die als absoluter Wert bezogen auf die Himmelsrichtung "Norden" erfasst werden, jeweils absolute Windrichtungen bestimmt. Anschließend wird ein Mittelwert gebildet, mit dem die an einer Windenergieanlage ermittelte absolute Windrichtung dann verglichen wird. Wird bei diesem Vergleich eine deutliche Abweichung festgestellt, kann dies auf eine fehlerhafte Erfassung der Windrichtung oder aber der Erfassung der Winkellage der Gondel der einen Windenergieanlage hinweisen. Ein Serviceteam kann dann vor Ort überprüfen, ob und, wenn ja, welcher Sensor ggf. defekt ist.

Nachteilige an dem Stand der Technik gemäß EP 2 520 764 A1 ist, dass der Windpark eine Mindestanzahl von Windenergieanlagen aufweisen muss, damit der gebildete Mittelwert mit ausreichender Sicherheit tatsächlich der korrekten Windrichtung entspricht. Bereits bei Windparks mit zehn Windenergieanlagen oder weniger zeigt sich, dass der gebildete Mittelwert nicht zwingend der tatsächlichen Windrichtung entspricht, weshalb auch davon festgestellte Abweichungen der für eine Windenergieanlage des Windparks ermittelte absolute Windrichtung nicht zwingend auf eine fehlerhafte Erfassung der Windrichtung oder der Winkellage der Gondel an dieser Windenergieanlage zurückzuführen ist. Je nach geografischer Anordnung der Windenergieanlagen eines Windparks, insbesondere bei Windparks mit mehr als zehn Windenergieanlagen, ist ggf. auch die Annahme, dass die tatsächliche Windrichtung an allen Windenergieanlagen grundsätzlich gleich ist, unzulässig.

Auch kann mit diesem Verfahren nicht überprüft werden, ob die zur Ermittlung der absoluten Windrichtung ermittelte Winkellage der Gondel mit der tatsächlichen Winkellage der Gondel einer Windenergieanlage übereinstimmt. So kann bei diesem Verfahren bspw. unentdeckt bleiben, dass eine Windenergieanlage, die angesichts der erfassten Winkellage als parallel zur Windrichtung ausgerichtet scheint, aufgrund fehlerhaft erfasster Winkellage dennoch nicht ideal zum Wind ausgerichtet ist. Andere Dokumente aus dem Stand der Technik, die sich mit ähnlicher Tematik befassen sind z.B. CN204344371, CN1298092 und EP1790851. Der Erfindung liegt die Aufgabe zugrunde, ein gegenüber dem Stand der Technik verbessertes Verfahren, ein verbessertes Computerprogrammprodukt zur Überprüfung der Ausrichtung von Windenergieanlagen, sowie eine verbesserte Anordnung von Windenergieanlagen zu schaffen.

Gelöst wird diese Aufgabe durch ein Verfahren gemäß dem Hauptanspruch, eine Anordnung gemäß Anspruch 11, sowie ein Computerprogrammprodukt gemäß Anspruch 12.

Demnach betrifft die Erfindung ein Verfahren zur Überprüfung der Ausrichtung von Windenergieanlagen, wobei die Ausrichtung einer ersten Windenergieanlage zum Wind anhand eines Windrichtungssensors der ersten Windenergieanlage erfolgt, gekennzeichnet durch die Schritte:
- Überprüfung der Kalibrierung eines Gondelazimutsensors der ersten Windenergieanlage durch Anpeilen eines bekannten Peilungsziels, wobei die Peilungsrichtung für die Peilung gegenüber der Gondel ortsfest ist, und Vergleich des gemessenen Gondelazimuts mit dem Peilungsazimut; und
- Überprüfung der Kalibrierung des Windrichtungssensors der ersten Windenergieanlage durch Beobachtung des Leistungsdefizits aufgrund von Abschattungen von wenigstens einer zweiten oder durch wenigstens eine zweite Windenergieanlage und Vergleich der Beobachtungen mit der durch den Windrichtungssensor der ersten Windenergieanlage ermittelten Windrichtung.

Die Erfindung betrifft weiterhin eine Anordnung umfassend wenigstens zwei Windenergieanlagen mit jeweils
- einer drehbar auf einem Turm angeordneten Gondel;
- einem Windrichtungssensor zur Erfassung der Windrichtung; und
- einem Gondelazimutsensors zur Erfassung des Gondelazimuts;
wobei wenigstens eine erste Windenergieanlage eine Peilungsvorrichtung zum Anpeilen eines bekannten Peilungsziels umfasst, wobei die Peilungsrichtung für die Peilung gegenüber der Gondel der ersten Windenergieanlage ortsfest ist, eine Berechnungseinheit zur Ermittlung des Leistungsdefizits der ersten Windenergieanlage gegenüber einer zweiten Windenergieanlage vorgesehen ist, und eine Überprüfungseinheit vorgesehen ist, die zur Durchführung des erfindungsgemäßen Verfahrens ausgebildet ist.

Die Erfindung betrifft weiterhin ein Computerprogrammprodukt umfassend Programmteile, welche, wenn geladen in einem Computer, zur Durchführung des erfindungsgemäßen Verfahrens ausgelegt sind.

Die Erfindung zeichnet sich durch die getrennte Kalibrierung von Gondelazimutsensor und Windrichtungssensor aus. Dadurch können aus sich gegenseitig aufhebenden Fehlkalibrierungen ergebende falschpositive Resultate wie bspw. bei einer Überprüfung der Ausrichtung von Windenergieanlagen, bei denen die Kalibrierung der beiden Sensoren gleichzeitig und gemeinsam überprüft wird, ausgeschlossen werden.

Zur Überprüfung der Kalibrierung des Gondelazimutsensors ist vorgesehen, dass ausgehend von der ersten Windenergieanlage ein in seiner relativen Position bekanntes Ziel angepeilt wird und der so ermittelte Peilungsazimut dann mit dem durch den Gondelazimutsensor gemessenen Gondelazimut - also der Winkel zwischen einer gegenüber der Gondel ortsfesten Achse o.ä., bspw. der Achse des Rotors, und einer Bezugsrichtung, bspw. der Himmelsrichtung "Norden" - verglichen wird. Die Peilung erfolgt dabei auf Grundlage einer Peilungsrichtung, die gegenüber der Gondel ortsfest ist, wobei mit Peilungsrichtung diejenige Richtung bezeichnet ist, in der das Anpeilen erfolgt. Der Peilungsazimut ist dann der Winkel zwischen Peilungsrichtung und einer Bezugsrichtung, die insbesondere eine Himmelsrichtung, vorzugsweise die Himmelsrichtung "Norden" sein kann. In anderen Worten bewegt sich die Peilungsrichtung für die Peilung mit jeder Drehung der Gondel mit, wodurch sich eine unmittelbare Verknüpfung von Peilungsazimut und Gondelazimut ergibt. Die Peilungsrichtung für die Peilung kann dabei vorzugsweise parallel zur Achse der Rotorachse der Windenergieanlage angeordnet sein.

Bei dem angepeilten Ziel kann es sich vorzugsweise um eine andere Windenergieanlage handeln, vorzugsweise um eine bzw. die zweite Windenergieanlage, die bei der Überprüfung der Kalibrierung des Windrichtungssensors herangezogen wird.

Es ist bevorzugt, wenn die Peilung eine optische Peilung ist. Dazu kann an der Gondel eine Peilungsvorrichtung vorgesehen sein, die eine Kamera zum Erfassen des Peilungsziels umfasst, wobei die Kamera gegenüber der Gondel der Windenergieanlage ortsfest ist. Die Peilungsvorrichtung kann mit einer Visiereinrichtung ausgerichtet sein. Die Visiereinrichtung kann bspw. Kimme und/oder Korn umfassen. Sie kann aber auch virtuell, d.h. lediglich in das Bild der Kamera eingeblendet sein. So kann ein von der Kamera erfasstes Bild bspw. mit einem Absehen überlagert werden.

Für die Anpeilung eines Ziels bzw. Überprüfung, ob sich ein angepeiltes Ziel in Peilungsrichtung befindet, kann das von der Kamera erfasste Bild durch eine Bildverarbeitungsvorrichtung automatisiert daraufhin untersucht werden, ob das angepeilte Ziel an der, der gewünschten Peilung entsprechenden Stelle des Bildes abgebildet wird. Wird das angepeilte Ziel nicht an der erwarteten Stelle auf dem Bild abgebildet, kann die Bildverarbeitung vorzugsweise aus der Abweichung der tatsächlichen Position der Abbildung des angepeilten Ziels und der erwarteten Position die Winkelabweichung und so den tatsächlichen Gondelazimut ermitteln. Alternativ kann das von der Kamera erfasste Bild auch manuell ausgewertet werden.

Die bei dem Vergleich ermittelte Abweichung des von dem Gondelazimutsensor erfassten Gondelazimuts von dem über die Peilung festgestellten Gondelazimut kann unmittelbar zur Neu-Kalibrierung des Gondelazimutsensors genutzt werden.

Zur Überprüfung der Kalibrierung des Windrichtungssensors wird zunächst das Leistungsdefizit aufgrund von Abschattungen von oder durch wenigstens eine zweite Windenergieanlage beobachtet. Liegt bspw. eine zweite Windenergieanlage ausgehend von einer ersten Windenergieanlage in der Richtung, aus der der Wind kommt, reduziert sich nämlich die Leistung der ersten Windenergieanlage aufgrund von durch die zweite Windenergieanlage erzeugten Verwirbelungen etc. Ebenso gilt, dass, wenn die zweite Windenergieanlage ausgehend von der ersten Windenergieanlage in der Richtung, in die der Wind weht, liegt, die zweite Windenergieanlage durch die erste Windenergieanlage abgeschattet wird, was zu einer Leistungsreduktion bei der zweiten Windenergieanlage führt.

Unter der beispielhaften Annahme einer Windrichtung, bei der ein Leistungsdefizit bei der ersten Windenergieanlage aufgrund von Abschattungseffekten durch die zweite Windenergieanlage vorliegen, und bei einer im Wesentlichen azimut-identischen Ausrichtung der beiden Windenergieanlagen - die bspw. anhand der durch die zuvor beschriebene Überprüfung kalibrierten Gondelazimutsensoren der beiden Windenergieanlagen festgestellt werden kann - spiegelt sich das Leistungsdefizit der ersten Windenergieanlage u.a. in dem Quotienten der von den beiden Windenergieanlagen jeweils erzeugten elektrischen Leistung wieder.

Kommt der Wind in diesem Beispiel ausgehend von der ersten Windenergieanlage genau aus der Richtung, in der die zweite Windenergieanlage steht, ist dieses Leistungsdefizit maximal. Über die Feststellung des maximalen Leistungsdefizits kann also genau identifiziert werden, wenn der Wind aus der Windrichtung kommt, in dem ausgehend von der ersten Windenergieanlage die zweite Windenergieanlage liegt. Wird eine entsprechende Windrichtung festgestellt, kann dann die Kalibrierung des Windrichtungssensors der ersten Windenergieanlage (aber auch der zweiten Windenergieanlage) überprüft werden. Dazu wird die durch den jeweiligen Windrichtungssensor ermittelte Windrichtung mit der über das maximale Leistungsdefizit festgestellten, tatsächlichen Windrichtung verglichen. Kommt es dabei zu einer Abweichung, ist der Windrichtungssensor der ersten und/oder zweiten Windenergieanlage nicht korrekt kalibriert. Misst der Windrichtungssensor die relative Windrichtung bezogen auf die Achse des Rotors der Windenergieanlage bedeutet die Windrichtung 0° in dem beschriebenen Szenario eine korrekte Kalibrierung. Wird von dem Windrichtungssensor die absolute, auf die Himmelrichtung "Norden" bezogene Windrichtung erfasst oder wird die relative Windrichtung mit Hilfe des Gondelazimuts in eine absolute Windrichtung umgerechnet, so wird die absolute Windrichtung bei korrekter Kalibrierung des Windrichtungssensors dem Gondelazimut entsprechen.

Vergleichbares gilt für den beispielhaften Fall, in dem der Wind ausgehend von der ersten Windenergieanlage in Richtung zur zweiten Windenergieanlage hin weht. In diesem Fall liegt dann das maximale Leistungsdefizit bei der zweiten Windenergieanlage vor, während das Leistungsdefizit bei der ersten Windenergieanlage minimal, im Regelfall sogar negativ ist. Auch in diesem Fall kann die durch den Windrichtungssensor wenigstens einer der beiden Windenergieanlagen ermittelte Windrichtung mit der über das Leistungsdefizit festgestellten, tatsächlichen Windrichtung verglichen und zur Überprüfung der Kalibrierung des Windrichtungssensors herangezogen werden.

Zur Bestimmung der tatsächlichen Windrichtung über das Leistungsdefizit können die theoretischen Windrichtungen mit maximalem und/oder minimalem Leistungsdefizit geometrisch über die Koordinaten der Windenergieanlagen bestimmt werden. Es ist auch möglich, die Windrichtungen mit Hilfe einer Simulation mit einem Wakemodel, welches den Nachlauf von Windenergieanlagen, ggf. mit Ablenkungseffekten, abbilden kann, zu bestimmen. Sind Ablenkungseffekte vorhanden, kann bei dem Vergleich von ermittelter und tatsächlicher Windrichtung bspw. ein Offset berücksichtigt werden. Auch ist es möglich, den Zusammenhang aus Leistungsdefizit und tatsächlicher Windrichtung aus historischen Daten der ersten und der wenigstens einen zweiten Windenergieanlage zu ermitteln. Diese historischen Daten umfassen wenigstens zeitliche Verlaufsdaten über die von den einzelnen Windenergieanlagen erzeugte elektrische Leistung, den Gondelazimut der einzelnen Windenergieanlagen sowie die absolute und/oder relative Windrichtung.

Für die Bestimmung der tatsächlichen Windrichtung über das Leistungsdefizit werden vorzugsweise die gegenseitigen Abschattungseffekte von mehr als zwei, insbesondere der zur ersten Windenergieanlage benachbarten Windenergieanlagen, vorzugsweise aller Windenergieanlagen eines Windparks umfassend die erste und die wenigstens eine zweite Windenergieanlage berücksichtigt.

Grundsätzlich ist die Bestimmung der tatsächlichen Windrichtung über das Leistungsdefizit nicht auf die Windrichtungen mit maximalem und/oder minimalem Leistungsdefizit beschränkt. Vielmehr ist es auch möglich, das Leistungsdefizit auch für andere Windrichtungen und Azimutstellungen der Windenergieanlagen theoretisch zu bestimmen und die aus einem festgestellten Leistungsdefizit ableitbare tatsächliche Windrichtung mit der über einen Windrichtungssensor ermittelten Windrichtung zu vergleichen.

Das Leistungsdefizit wird vorzugsweise auf Basis des Quotienten aus der erzeugten Leistung der ersten Windenergieanlage und der zweiten Windenergieanlage ermittelt. Die bei dem Vergleich ermittelte Abweichung der von dem Windrichtungssensor erfassten Windrichtung von der über das maximale Leistungsdefizit festgestellten Windrichtung kann unmittelbar zur Neu-Kalibrierung des Windrichtungssensors genutzt werden. Die Informationen über die erzeugten Leistungen der einzelnen Windenergieanlagen als Grundlage für die Bestimmung des Leistungsdefizits werden bei Windenergieanlagen aus Steuerungs- und Abrechnungszwecken bereits regelmäßig erfasst und liegen also vor, bspw. im Rahmen einer SCADA-Anwendung.

Es wird erneut darauf hingewiesen, dass zur Ermittlung des Leistungsdefizits zwischen zwei Windenergieanlagen die Azimutstellungen der beiden Windenergieanlagen vorzugsweise gleich, zumindest jedoch genau bekannt sind. Entsprechendes kann durch die oben bereits beschriebene Überprüfung der Kalibrierung des Gondelazimutsensors bei beiden Windenergieanlagen anschließend über die Gondelazimutsensoren sichergestellt werden.

Zur Erläuterung der erfindungsgemäßen Anordnung und des erfindungsgemäßen Computerprogrammproduktes wird auf die vorstehenden Ausführungen verwiesen.

Die Überprüfungseinheit des erfindungsgemäßen Anordnung kann unmittelbar bei der Anordnung angeordnet sein. Es ist aber auch möglich, dass die Überprüfungseinheit entfernt vom der Anordnung angeordnet und mit dieser lediglich über eine Datenleitung oder bspw. das Internet verbunden ist.

Bei der erfindungsgemäßen Anordnung kann es sich um einen Windpark handeln. In diesem Fall sind die Windenergieanlagen über die für die Durchführung des erfindungsgemäßen Verfahrens erforderliche Anbindung an die Überprüfungseinheit hinaus miteinander verbunden und bilden aus Sicht des Netzes, in das die elektrische Leistung eingespeist wird, eine technische Einheit.

Je nach Standortgegebenheiten, insbesondere bei mehrreihigen Windparks, kann es vorkommen dass das Leistungsdefizit durch die Abschattungseffekte nicht sehr stark ausgeprägt oder von anderen Effekten überlagert wird.

In diesem Fall sieht eine vorteilhafte Ausführungsform der Erfindung vor, dass mindestens eine in Windrichtung aufwärts stehende Windenergieanlage gezielt abgeschaltet wird. Somit wird ein Leistungsdefizit durch Vergleich der Leistungsmessung mit stehender und im Betrieb befindlicher Nachbaranlage klar erkennbar gemacht. Hierbei kann vorteilhaft die den Hauptabschattungseffekt hervorrufende Windenergieanlage gezielt an- und abgeschaltet werden, um das Leistungsdefizit zu ermitteln. Alternativ werden Windenergieanlagen, die durch sekundäre Abschattungseffekte (weil sie z.B. einige Reihen weiter in Windrichtung aufwärts stehen) das gesuchte Leistungsdefizit überlagern bzw. kaschieren, abgeschaltet, sodass der gesuchte Effekt frei von Störeffekten gemessen wird. Beide Maßnahmen ermöglichen eine gute Abgrenzung des gesuchten maximalen Leistungsdefizits gegenüber dem Hintergrundrauschen durch die natürliche Windturbulenz.

In einer besonders vorteilhaften Ausführung werden die Messungen dann durchgeführt, wenn die betreffenden Windenergieanlagen aus anderen Gründen, z.B. aufgrund von Wartungsmaßnahmen oder aufgrund eines Einspeisemanagements, ohnehin stillgesetzt werden. Somit werden zusätzliche Ertragsverluste durch die Abschaltungen vermieden.

Die Erfindung wird nun anhand einer bevorzugten Ausführungsform unter Bezugnahme auf die beigefügten Zeichnungen beispielhaft beschrieben. Es zeigen:
- Figur 1:: eine schematische Darstellung einer erfindungsgemäßen Anordnung, in dem das erfindungsgemäße Verfahren ausgeführt wird;
- Figur 2:: eine Detailansicht zweier Windenergieanlagen aus der Anordnung gemäß Figur 1;
- Figur 3:: ein Bild der Peilungsvorrichtung einer der Windenergieanlagen gemäß Figur 2; und
- Figur 4:: eine beispielhafte Darstellung des Leistungsquotienten der Windenergieanlagen gemäß Figur 2 in Abhängigkeit des Gondelazimuts.

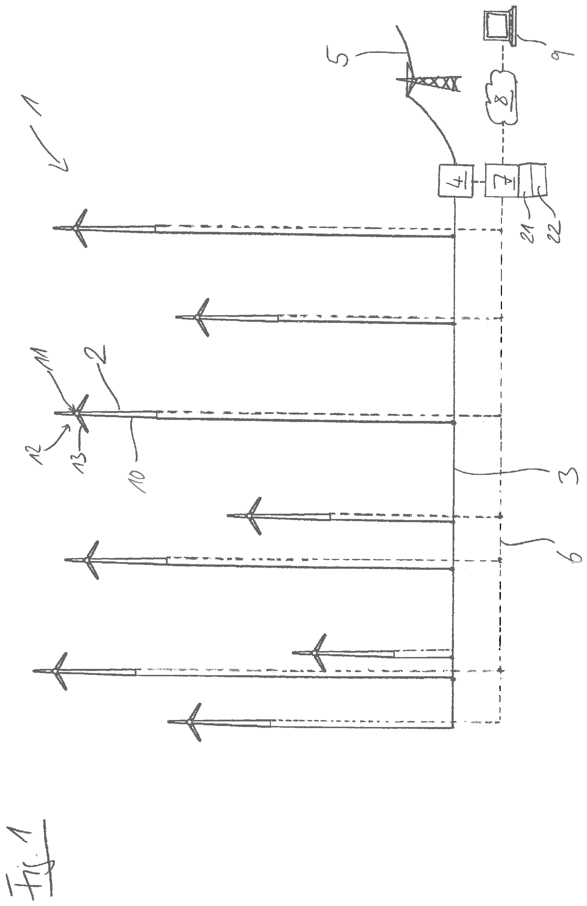

In Figur 1 ist eine erfindungsgemäße Anordnung 1 dargestellt. Die Anordnung 1 umfasst eine Mehrzahl von Windenergieanlagen 2, die in räumlicher Ansammlung angeordnet sind. Im dargestellten Ausführungsbeispiel ist die Anordnung 1 ein Windpark, sodass die Windenergieanlagen 2 die von ihnen erzeugte elektrische Leistung über ein windparkinternes Netz 3 und einen einzelnen Einspeisepunkt 4 in ein öffentliches Stromnetz 5 einspeisen, wobei insbesondere am Einspeisepunkt 4 ggf. Transformatoren und Umrichter (nicht dargestellt) vorgesehen sein können, um die erzeugte Leistung an die Vorgaben des Stromnetzes 5 anzupassen. Weiterhin sind die Windenergieanlagen 2 über Datenleitungen 6 mit einem zur Kontrolle und Steuerung der Windenergieanlagen 2 ausgebildeten Parkmaster 7 verbunden. Der Parkmaster 7 erhält von den Windenergieanlagen insbesondere Informationen über die von den einzelnen Windenergieanlagen 2 in das windparkinterne Netz 3 eingespeist werden.

Der Parkmaster 7 ist weiterhin dazu ausgebildet, über ein Datenfernübertragungsnetz 8 - wie bspw. das Internet - Informationen über die Anordnung 1 bzw. den Windpark sowie die einzelnen Windenergieanlagen 2 an ein entfernt vom Windpark angeordnetes SCADA-Terminal 9 zu übermitteln und von dort Steuerbefehle zu erhalten.

Am Parkmaster 7 ist eine Berechnungseinheit 21 vorgesehen, mit der das Leistungsdefizit zweier Windenergieanlagen 2 auf Basis des Quotienten der von diesen beiden Windenergieanlagen 2 eingespeisten elektrischen Leistung ermittelt werden kann. Auch ist am Parkmaster 7 eine Überprüfungseinheit 22 vorgesehen, deren Funktionsweise später noch näher erläutert wird.

Sowohl die Berechnungseinheit 21 als auch die Überprüfungseinheit 22 greifen auf verschiedene Informationen über den Betrieb der Windenergieanlagen 2 der Anordnung 1 zurück, die insbesondere von den Windenergieanlagen 2 zur Verfügung gestellt werden. Diese Informationen gelangen über das windparkinterne Datennetz 6 zu den am Parkmaster 7 angeordneten Einheiten 21, 22, deren Ergebnisse wiederum an die Windenergieanlagen 2 und/oder das SCADA-Terminal 9 übermittelt werden können. Es ist auch möglich, die Berechnungseinheit 21 und/oder die Überprüfungseinheit 22 am SCADA-Terminal 9 anzuordnen, wobei dann die benötigten Informationen von den Windenergieanlagen 2 und/oder dem Parkmaster 7 über das Datenfernübertragungsnetz 8 an die Einheit(en) 21, 22 übermittelt werden.

Die Windenergieanlagen 2 umfassen jeweils eine, auf einem Turm 10 drehbar gelagerte Gondel 11, an der wiederum drehbar ein Rotor 12 mit Rotorblättern 13 angeordnet ist. Der Rotor 12 wird bei Ausrichtung der Gondel 11 zum Wind in Rotation versetzt und treibt einen (nicht dargestellten) Generator an, der die Rotation in elektrische Leistung wandelt, die dann - ggf. unter Zwischenschaltung von Transformatoren und/oder Umrichtern (nicht dargestellt) - in das windparkinterne Netz 3 eingespeist wird.

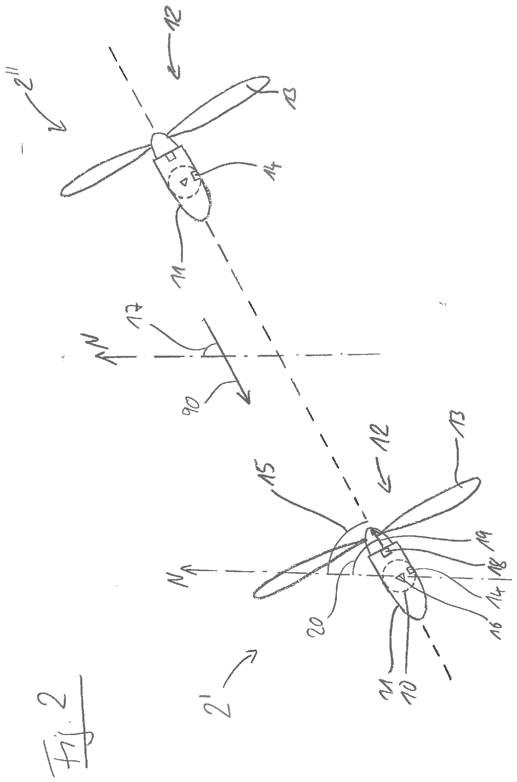

In Figur 2 sind exemplarisch zwei Windenergieanlagen 2 der Anordnung 1 aus Figur 1 in Draufsicht gezeigt, eine erste Windenergieanlage 2' und eine zweite Windenergieanlage 2". Die erste und die zweite Windenergieanalgen 2', 2" sind im dargestellten Ausführungsbeispiel baugleich ausgeführt, weshalb die nachfolgenden Erläuterungen zur ersten Windenergieanlage 2' analog auch für die zweite Windenergieanlage 2" gelten.

Die erste Windenergieanlage 2' weist einen Gondelazimutsensor 14 auf, mit dessen Hilfe die Ausrichtung der Gondel 11 gegenüber der Himmelsrichtung "Norden" (N) in Form des Gondelazimuts 15 erfasst wird. Die Windenergieanlage 2' umfasst weiterhin einen Windrichtungssensor 16, mit dem die Windrichtung 17 bestimmt werden kann. Die Windrichtung 17 ist dabei die relative Richtung, aus der der Wind (angedeutet durch Pfeil 90) kommt und wird als Gradangabe ausgehend von der Achse des Rotors 12 angegeben. Über den Gondelazimut lässt sich die relative Windrichtung in eine absolute Windrichtung gegenüber der Himmelrichtung "Norden" (N) umrechnen.

Die Gondel 11 der Windenergieanlage 2' kann über einen nicht dargestellten Azimutantrieb derart gegenüber dem Turm 10 verfahren werden, dass der durch den Gondelazimutsensor 14 erfasste Gondelazimut 15 der durch den Windrichtungssensor 16 erfassten Windrichtung 17 entspricht. Sofern Gondelazimut 15 und Windrichtung 17 korrekt erfasst sind, wird dadurch der Rotor 12 der Windenergieanlage 2' so zum Wind hin ausgerichtet.

Weiterhin umfasst die Windenergieanlage 2' eine fest mit der Gondel 11 verbundene, eine Kamera umfassende Peilungsvorrichtung 18 auf, deren Peilungsrichtung 19 gegenüber der Gondel 11 ortsfest ist. Der Peilungsazimut 20 ist der Winkel zwischen der Peilungsrichtung 19 und der Himmelrichtung "Norden" (N).

Nachfolgend wird nun das erfindungsgemäße Verfahren beschrieben, welches durch die Überprüfungseinheit 22 ausgeführt wird. Dabei wird davon ausgegangen, dass der Gondelazimutsensor 14 der zweiten Windenergieanlage 2" den Gondelazimut 15 der zweiten Windenergieanlage 2" korrekt erfasst. Entsprechendes kann sichergestellt werden, indem die nachfolgend beschriebene Überprüfung der Kalibrierung des Gondelazimutsensors 14 zuvor für die zweite Windenergieanlage 2" ausgeführt wurde.

Die Kalibrierung des Gondelazimutsensors 14 der ersten Windenergieanlage 2' wird durch Anpeilen eines bekannten Peilungsziels mithilfe der Peilungsvorrichtung 18 überprüft. Im dargestellten Ausführungsbeispiel ist das Peilungsziel die zweite Windenergieanlage 2", für die bekannt ist, dass die Peilung ausgehend von der ersten Windenergieanlage 2' 30° ist.

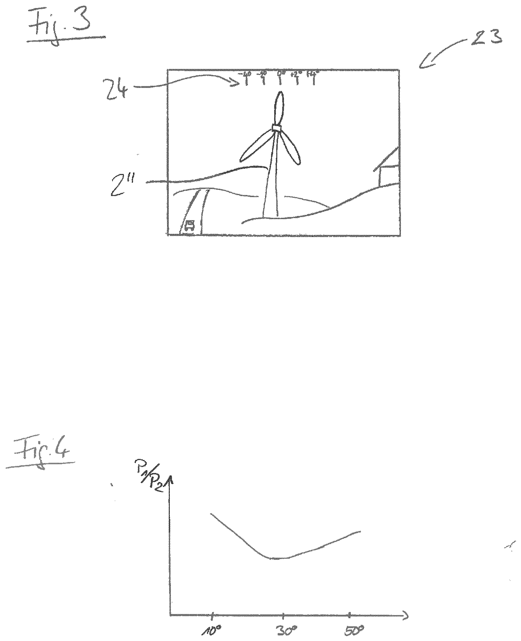

Zum Anpeilen der zweiten Windenergieanlage 2" wird das von der Kamera der Peilungsvorrichtung 18 der ersten Windenergieanlage 2' aufgenommene Bild 23 verwendet. In Figur 3 ist das Bild 23 der Peilvorrichtung 18 beispielhaft dargestellt, wobei auf dem Bild u.a. die zweite Windenergieanlage 2" abgebildet ist. Außerdem ist dem Bild 23 ein Absehen als - in diesem Fall virtuelle - Visiereinrichtung 24 überlagert. Alternativ dazu kann die Peilungsvorrichtung 18 ein Korn o.ä. umfassen, welches von der Kamera der Peilungsvorrichtung 18 erfasst wird. Durch manuelle Überprüfung des Bildes 23 kann mit Hilfe der Visiereinrichtung 24 unmittelbar festgestellt werden, dass sich die zweite Windenergieanlage 2" im dargestellten Beispiel genau in Peilungsrichtung 19 befindet. Da diese Peilungsrichtung 19 parallel und ortsfest zur Achse des Rotors 12 der ersten Windenergieanlage 2' ausgerichtet ist, kann so festgestellt werden, dass der tatsächliche Gondelazimut 15 30° beträgt.

Alternativ zu einer manuellen Auswertung des Bildes 23 kann auch eine automatisierte Auswertung durch eine Bildverarbeitungsvorrichtung erfolgen. In diesem Fall ist eine Visiereinrichtung 24 nicht zwingend erforderlich. Vielmehr kann die Bildverarbeitungsvorrichtung unmittelbar anhand der Position der Abbildung der zweiten Windenergieanlage 2" auf dem Bild 23 die Peilung und somit den tatsächlichen Gondelazimut 15 bestimmen.

Ist anhand der Peilungsvorrichtung 18 der Peilungsazimut 20 (welcher dem tatsächlichen Gondelazimut entspricht) bestimmt, kann dieser mit dem von dem Gondelazimutsensor 14 ermittelten Gondelazimut 15 verglichen werden. Sind Peilungsazimut 20 und ermittelter Gondelazimut 15 identisch, ist der Gondelazimutsensor 14 korrekt kalibriert. Ist dies nicht der Fall, kann der Gondelazimutsensor 14 ggf. unmittelbar neu auf den Peilungsazimut 20 kalibriert werden, sodass die beiden Werte identisch sind.

Die Überprüfung der Kalibrierung des Windrichtungssensors 16 der ersten Windenergieanlage 2' erfolgt durch Beobachtung des Leistungsdefizits der ersten Windenergieanlage 2' aufgrund von Abschattung durch die zweite Windenergieanlage 2".

Im Allgemeinen lässt sich das zu erwartende Leistungsdefizit der ersten Windenergieanlage 2' gegenüber der zweiten Windenergieanlage 2" in Abhängigkeit des Gondelazimuts 15 der beiden Windenergieanlagen 2', 2" theoretisch bestimmen, bspw. allein aus der geographischen Anordnung der beiden Windenergieanlagen 2', 2". In Figur 4 ist beispielhaft der Verlauf des Verhältnis der von der ersten Windenergieanlage 2' erzeugten elektrischen Leistung (P₁) gegenüber der von der zweiten Windenergieanlage 2" erzeugen elektrischen Leistung (P₂) in Abhängigkeit des Gondelazimuts 15 dargestellt. Es ist ohne weiteres ersichtlich, dass bei einem Gondelazimut 15 von 30° das maximale Leistungsdefizit vorliegt. Wie aus Figur 2 ersichtlich, ist in diesem Fall die Abschattung der ersten Windenergieanlage 2' durch die zweite Windenergieanlage 2" am größten. Das Leistungsdefizit lässt sich bspw. über die Gleichung 1-P₁/P₂ bestimmten.

Wird sowohl die erste Windenergieanlage 2' als auch die zweite Windenergieanlage 2" aufgrund einer durch den Windrichtungssensor 16 erfassten vermeintlichen Windrichtung von 30° auf eine Gondelazimut 15 von 30° verfahren, kann über die Berechnungseinheit 21 das tatsächliche Leistungsdefizit der ersten Windenergieanlage 2' gegenüber der zweiten Windenergieanlage 2" ermittelt werden. Sofern das so ermittelte Leistungsdefizit nicht mit dem zuvor theoretisch bestimmten maximalen Leistungsdefizit übereinstimmt, ist davon auszugehen, dass die tatsächliche Windrichtung 17 nicht mit der vom Windrichtungssensor 16 erfassten Windrichtung übereinstimmt. Es ist in der Folge von einem Kalibrierungsfehler des Windrichtungssensors 16 auszugehen.

Beträgt die tatsächliche Windrichtung 17 30° und sich die beiden Windenergieanlagen 2', 2" zum Wind hin ausgerichtet (d.h. der jeweilige Gondelazimut 15 beträgt ebenfalls 30°), kann dies durch das Vorliegen des maximalen Leistungsdefizits bestätigt werden. In diesem Fall kann der Windrichtungssensor 16 der ersten Windenergieanlage 2' (aber auch der zweiten Windenergieanlage 2") - sofern diese nicht die Windrichtung 17 von 30° anzeigen - entsprechend der Windrichtung 17 kalibriert werden.

Es ist im Übrigen auch möglich, für weitere Gondelazimute 15 der beiden Windenergieanlagen 2', 2" jeweils einen theoretischen Verlauf des Leistungsdefizits in Abhängigkeit von der tatsächlichen Windrichtung 17 zu bestimmen. Durch einen Vergleich des theoretisch bestimmten Leistungsdefizits bei einem beliebigen von dem Gondelazimutsensor 14 erfassten Gondelazimuts 15 und der von dem Windrichtungssensor 16 erfassten Windrichtung mit dem von der Berechnungseinheit 21 ermittelten tatsächlichen Leistungsdefizit kann - sofern zuvor die Kalibrierung des Gondelazimutsensors 14 überprüft wurde (siehe oben) festgestellt werden, ob der Windrichtungssensor 16 korrekt kalibriert ist.

## Patentansprüche

1. Verfahren zur Überprüfung der Ausrichtung von Windenergieanlagen (2), wobei die Ausrichtung einer ersten Windenergieanlage (2')zum Wind anhand eines Windrichtungssensors (16) der ersten Windenergieanlage (2')erfolgt, **gekennzeichnet durch** die Schritte:
- Überprüfung der Kalibrierung eines Gondelazimutsensors (14) der ersten Windenergieanlage (2') durch Anpeilen eines bekannten Peilungsziels, wobei die Peilungsrichtung (19) für die Peilung gegenüber der Gondel (11) ortsfest ist, und Vergleich des gemessenen Gondelazimuts (15) mit dem Peilungsazimut (20); und
- Überprüfung der Kalibrierung des Windrichtungssensors (16) der ersten Windenergieanlage (2') durch Beobachtung des Leistungsdefizits aufgrund von Abschattungen von wenigstens einer zweiten oder durch wenigstens eine zweite Windenergieanlage (2") und Vergleich der Beobachtungen mit der durch den Windrichtungssensor (16) der ersten Windenergieanlage (2') ermittelten Windrichtung (17).

2. Verfahren nach Anspruch 1,
**dadurch gekennzeichnet, dass**
das Peilungsziel eine andere Windenergieanlage (2), vorzugsweise die oder eine zweite Windenergieanlage (2") ist.

3. Verfahren nach einem der vorhergehenden Ansprüche,
**dadurch gekennzeichnet, dass**
die Peilung eine optische Peilung ist.

4. Verfahren nach Anspruch 3,
**dadurch gekennzeichnet, dass**
die Peilung mit einer Peilungsvorrichtung (18) umfassend eine Kamera erfolgt, wobei die Peilungsvorrichtung (18) vorzugsweise eine Visiereinrichtung (24) umfasst.

5. Verfahren nach Anspruch 4,
**dadurch gekennzeichnet, dass**
die Peilung anhand des von der Kamera der Peilungsvorrichtung (18) erfassten Bildes (23) automatisiert durch eine Bildverarbeitungsvorrichtung überprüft wird.

6. Verfahren nach einem der vorhergehenden Ansprüche,
**dadurch gekennzeichnet, dass**
die bei dem Vergleich ermittelte Abweichung des von dem Gondelazimutsensor (14) erfassten Gondelazimuts von dem über die Peilung festgestellten Gondelazimut unmittelbar zur Re-Kalibrierung des Gondelazimutsensors (14) genutzt wird.

7. Verfahren nach einem der vorhergehenden Ansprüche,
**dadurch gekennzeichnet, dass**
die Windrichtungen (17) mit maximalem und/oder minimalem Leistungsdefizit geometrisch über die Koordinaten der Windenergieanlagen (2), über eine Simulation der Windenergieanlagen (2) mit Wakemodel und/oder aus historischen Daten der Windenergieanlagen (2) ermittelt werden.

8. Verfahren nach einem der vorhergehenden Ansprüche,
**dadurch gekennzeichnet, dass**
für die Bestimmung der tatsächlichen Windrichtung über das Leistungsdefizit die gegenseitigen Abschattungseffekte von mehr als zwei, vorzugsweise von zur ersten Windenergieanlage (2') benachbarten Windenergieanlagen (2"), weiter vorzugsweise aller Windenergieanlagen (2") eines Windparks berücksichtigt werden.

9. Verfahren nach einem der vorhergehenden Ansprüche,
**dadurch gekennzeichnet, dass**
das Leistungsdefizit auf Basis des Quotienten aus der erzeugten Leistung der ersten Windenergieanlage (2') und der zweiten Windenergieanlage (2") ermittelt wird.

10. Verfahren nach einem der vorhergehenden Ansprüche,
**dadurch gekennzeichnet, dass**
die bei dem Vergleich ermittelte Abweichung der von dem Windrichtungssensor (16) erfassten Windrichtung von der über das maximale Leistungsdefizit festgestellten Windrichtung unmittelbar zur Re-Kalibrierung des Windrichtungssensors (16) genutzt wird.

11. Anordnung (1) umfassend wenigstens zwei Windenergieanlagen (2) mit jeweils
- einer drehbar auf einem Turm (10) angeordneten Gondel (11) ;
- einem Windrichtungssensor (16) zur Erfassung der Windrichtung (17); und
- einem Gondelazimutsensor (14) zur Erfassung des Gondelazimuts (15);
**dadurch gekennzeichnet, dass**
wenigstens eine erste Windenergieanlage (2') eine Peilungsvorrichtung (18) zum Anpeilen eines bekannten Peilungsziel umfasst, wobei die Peilungsrichtung (18) für die Peilung gegenüber der Gondel (11) der ersten Windenergieanlage (2') ortsfest ist,
eine Berechnungseinheit (21) zur Ermittlung des Leistungsdefizits der ersten Windenergieanlage (2') gegenüber einer zweiten Windenergieanlage (2") vorgesehen ist, und eine Überprüfungseinheit (22) vorgesehen ist, die zur Durchführung des Verfahrens gemäß einem der Ansprüche 1 bis 10 ausgebildet ist.

12. Computerprogrammprodukt umfassend Programmteile, welche, wenn geladen in einem Computer, zur Durchführung eines Verfahrens nach einem der Ansprüche 1 bis 10 ausgelegt sind.

## Claims

1. Method for checking the alignment of wind turbines (2), wherein the alignment of a first wind turbine (2') with respect to the wind is performed by way of a wind direction sensor (16) of the first wind turbine (2'), **characterized by** the steps of:
- checking the calibration of a nacelle azimuth sensor (14) of the first wind turbine (2') by taking a bearing on a known bearing target, wherein the bearing direction (19) for taking the bearing is positionally fixed with respect to the nacelle (11), and comparing the measured nacelle azimuth (15) to the bearing azimuth (20); and
- checking the calibration of the wind direction sensor (16) of the first wind turbine (2') by observing the power deficit due to blocking of at least one second or by at least one second wind turbine (2") and comparing the observations to the wind direction (17) ascertained by way of the wind direction sensor (16) of the first wind turbine (2').

2. Method according to Claim 1,
**characterized in that**
the bearing target is a different wind turbine (2), preferably the or a second wind turbine (2").

3. Method according to one of the preceding claims,
**characterized in that**
taking a bearing is optically taking a bearing.

4. Method according to Claim 3,
**characterized in that**
a bearing is taken using a bearing-taking apparatus (18) comprising a camera, wherein the bearing-taking apparatus (18) preferably comprises a sighting device (24).

5. Method according to Claim 4,
**characterized in that**
the bearing that was taken is checked on the basis of the image (23) captured by the camera of the bearing-taking apparatus (18) in automated fashion by way of an image processing apparatus.

6. Method according to one of the preceding claims,
**characterized in that**
the deviation, ascertained during the comparison, of the nacelle azimuth, captured by the nacelle azimuth sensor (14), from the nacelle azimuth, determined by way of taking a bearing, is used directly to recalibrate the nacelle azimuth sensor (14).

7. Method according to one of the preceding claims,
**characterized in that**
the wind directions (17) with maximum and/or minimum power deficit are geometrically ascertained via the coordinates of the wind turbines (2), via a simulation of the wind turbines (2) using a wake model and/or from historical data of the wind turbines (2).

8. Method according to one of the preceding claims,
**characterized in that**,
for determining the actual wind direction by way of the power deficit, the mutual blocking effects of more than two wind turbines (2"), preferably of wind turbines (2") which neighbour the first wind turbine (2'), with further preference of all wind turbines (2") of a wind farm are taken into consideration.

9. Method according to one of the preceding claims, **characterized in that**
the power deficit is ascertained on the basis of the quotient of the produced power of the first wind turbine (2') and of the second wind turbine (2").

10. Method according to one of the preceding claims, **characterized in that**
the deviation, ascertained during the comparison, of the wind direction, captured by the wind direction sensor (16), from the wind direction, determined via the maximum power deficit, is used directly to recalibrate the wind direction sensor (16).

11. Arrangement (1) comprising at least two wind turbines (2), comprising in each case
- a nacelle (11) arranged rotatably on a mast (10);
- a wind direction sensor (16) for capturing the wind direction (17); and
- a nacelle azimuth sensor (14) for capturing the nacelle azimuth (15);
**characterized in that**
at least one first wind turbine (2') comprises a bearing-taking apparatus (18) for taking a bearing on a known bearing target, wherein the bearing direction (18) for taking the bearing is positionally fixed with respect to the nacelle (11) of the first wind turbine (2'),
a calculation unit (21) is provided for ascertaining the power deficit of the first wind turbine (2') with respect to a second wind turbine (2"), and a checking unit (22) is provided which is configured for performing the method according to one of Claims 1 to 10.

12. Computer program product, comprising program parts which, when loaded on a computer, are configured for performing a method according to one of Claims 1 to 10.

## Revendications

1. Procédé pour vérifier l'orientation d'éoliennes (2), dans lequel l'orientation d'une première éolienne (2') est effectuée par rapport au vent sur la base d'un capteur de direction du vent (16) de la première éolienne (2'), **caractérisé par** les étapes consistant à :
- vérifier l'étalonnage d'un capteur d'azimut de nacelle (14) de la première éolienne (2') en visant une cible de visée connue, dans lequel la direction de visée (19) destinée à la visée est stationnaire par rapport à la nacelle (11), et comparer l'azimut de nacelle mesuré (15) à l'azimut de visée (20) ; et
- vérifier l'étalonnage du capteur de direction du vent (16) de la première éolienne (2') en observant le déficit de puissance sur la base d'ombres portées d'au moins une deuxième ou par au moins une deuxième éolienne (2") et comparer les observations à la direction du vent (17) déterminée par le capteur de direction du vent (16) de la première éolienne (2').

2. Procédé selon la revendication 1,
**caractérisé en ce que** la cible de visée est une autre éolienne (2), de préférence ladite ou une deuxième éolienne (2'').

3. Procédé selon l'une quelconque des revendications précédentes,
**caractérisé en ce que** la visée est une visée optique.

4. Procédé selon la revendication 3,
**caractérisé en ce que** la visée est effectuée à l'aide d'un dispositif de visée (18) comprenant une caméra, dans lequel le dispositif de visée (18) comprend de préférence un viseur (24).

5. Procédé selon la revendication 4,
**caractérisé en ce que** la visée est vérifiée de manière automatisée par un dispositif de traitement d'image sur la base de l'image (23) détectée par la caméra du dispositif de visée (18).

6. Procédé selon l'une quelconque des revendications précédentes,
**caractérisé en ce que** l'écart déterminé, lors de la comparaison, entre l'azimut de nacelle (14) détecté par le capteur d'azimut de nacelle, et l'azimut de nacelle établi par l'intermédiaire de la visée, est utilisé directement pour réétalonner le capteur d'azimut de nacelle (14).

7. Procédé selon l'une quelconque des revendications précédentes,
**caractérisé en ce que** les directions du vent (17) donnant un déficit de puissance maximal et/ou minimal sont déterminées géométriquement par l'intermédiaire des coordonnées des éoliennes (2), par l'intermédiaire d'une simulation des éoliennes (2) au moyen d'un modèle de sillage et/ou à partir de données historiques des éoliennes (2).

8. Procédé selon l'une quelconque des revendications précédentes,
**caractérisé en ce que** les effets d'ombre opposés de plus de deux éoliennes, de préférence des éoliennes (2") voisines de la première éolienne (2'), et plus préférablement de toutes les éoliennes (2") d'un parc éolien, sont pris en compte pour la détermination de la direction effective du vent par l'intermédiaire du déficit de puissance.

9. Procédé selon l'une quelconque des revendications précédentes,
**caractérisé en ce que** le déficit de puissance est déterminé sur la base du quotient des puissances produites par la première éolienne (2') et par la deuxième éolienne (2'').

10. Procédé selon l'une quelconque des revendications précédentes,
**caractérisé en ce que** l'écart déterminé lors de la comparaison entre la direction du vent détectée par le capteur de direction du vent (16) et la direction du vent établie par l'intermédiaire du déficit de puissance maximal est utilisé directement pour réétalonner le capteur de direction du vent (16).

11. Système (1) comprenant au moins deux éoliennes (2) comportant respectivement :
- une nacelle (11) disposée de manière rotative sur une tour (10) ;
- un capteur de direction du vent (16) destiné à détecter la direction du vent (17) ; et un
- capteur d'azimut de nacelle (14) destiné à détecter l'azimut de nacelle (15) ;
**caractérisé en ce qu'**au moins une première éolienne (2') comprend un dispositif de visée (18) destiné à viser une cible de visée connue, dans lequel la direction de visée (18) destinée à la visée est stationnaire par rapport à la nacelle (11) de la première éolienne (2'),
**en ce qu'**il est prévu une unité de calcul (21) destinée à déterminer le déficit de puissance de la première éolienne (2') par rapport à une deuxième éolienne (2''), et **en ce qu'**il est prévu une unité de vérification (22) qui est conçue pour mettre en oeuvre le procédé selon l'une quelconque des revendications 1 à 10.

12. Produit de programme d'ordinateur comprenant des parties de programme qui, lorsqu'elles sont chargées dans un ordinateur, sont aptes à mettre en oeuvre un procédé selon l'une quelconque des revendications 1 à 10.
